# EUROPEAN PATENT APPLICATION

(11) **EP 1 170 644 A2**
(43) Date of publication of application: **09.01.2002**
(21) Application number: 01115002.6
(22) Date of filing: 20.06.2001
(51) Int. Cl.: G05B 19/042

(54) **Part retrieving system for production machines utilizing network**

(30) Priority: 04.07.2000 JP 2000201900
(71) Applicant: Murata Kikai Kabushiki Kaisha, Minami-ku, Kyoto-shi, Kyoto 601 (JP)
(72) Inventor: Sekitani, Hiroyuki, Kani-shi, Gifu (JP)
(74) Representative: Liedl, Christine, Dipl.-Chem.

(57) **Abstract**

The present invention provides a system wherein, even for production machines having their specification frequently changed, a user can easily and promptly identify their parts including portions of the specification which are unique to the individual production machines. Further, with this system, the user can execute retrievals from anywhere as long as his or her terminal is connected to the network. The present part retrieving system comprises a part database 1 and a terminal 4 connected to the part database 1 via a communication network 3 such as the Internet. The part database 1 has information on parts accumulated therein, the parts constituting each of production machines having different specifications. The terminal 4 comprises part information requesting means 13 for issuing requests to the part database 1, storage means 14 for storing the transmitted part information, and retrieval means 15. The retrieval means 15 retrieves parts from machine part information in the storage means 14 depending on retrieval conditions (Fig. 1).

## Description

### Field of the Invention

The present invention relates to a part retrieving system for production machines utilizing a network, the system allowing a user to easily obtain part identifying information such as part numbers when, for example, replacing defective or consumed parts with new ones for production machines such as punch presses or lathes.

### Background of the Invention

If any part of a production machine is defective or consumed and must be replaced with a new one, the new part is ordered from a service office of a corresponding manufacturer by telephone or fax. Alternatively, a staff member of the service office may check the defective site to order a required part.
The part is ordered by identifying it with its part number or the like, but in many cases, the part number cannot be seen from the outside or simply by removing a body cover. If the machine is disassembled, how to deal with the disassembled machine until a replacement part is sent to the site will be a problem. In such a case, the part number is identified using a part table, an assembly drawing, or the like.

Production machines such as machine tools, however, may each comprise thousand or several thousand parts. Thus, a large amount of time and labor is required to identify the part number by checking the part table, assembly drawing, or the like, and no one but skilled personnel can identify it easily.
Further, the part table is made for each machine type, but each production machine has details of its original design frequently changed and information on such changes in the details of its original design is not recorded. Thus, the part number may not be identified even using the part table or assembly drawing. As a result, a large amount of time is required to recover the machine, and if that part relates to the basic operation of the machine, the operation of the machine must be totally stopped, thereby delaying the production schedule.

It is an object of the present invention to provide a part retrieving system for production machines wherein even for production machines having their specification frequently changed, a user can easily and promptly identify their parts including portions of the specification which are unique to the individual production machines, and wherein the user can execute retrievals from anywhere as long as his or her terminal is connected to a network.

It is another object of the present invention to provide a part retrieving system wherein only a minimum required amount of data is required to be transmitted, thus reducing the amount of time required to retrieve parts.

It is yet another object of the present invention to enable the user to specify individual production machines even if identification information on these production machines is not reliable or if the user does not know about these production machines.

### Summary of the Invention

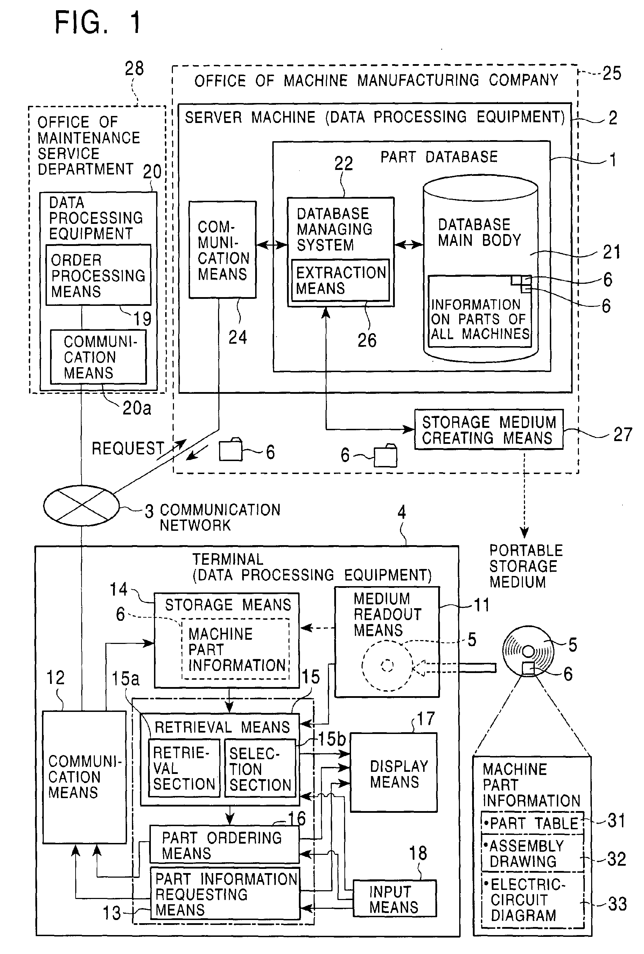

The present invention will be described with reference to Figure 1 corresponding to an embodiment thereof. This part retrieving system for production machines comprises a part database 1 and a terminal 4 connected to the part database 1 via a communication network 3 for bidirectional communications with the part database. The part database 1 has information on parts accumulated therein, the parts constituting each of production machines having different specifications. The terminal 4 comprises part information requesting means 13 for requesting the part database 1 to transmit the part information, storage means 14 for storing the part information transmitted in response to the transmission request, and retrieval means 15 for retrieving parts from the stored part information 6 depending on retrieval conditions.

According to this system, when the terminal 4 causes the part information requesting means 13 to request the part database 1 to transmit part information, the part database 1 transmits the requested part information to the terminal 4. The terminal 4 stored the received part information in the storage means 14 so that the retrieval means 15 can retrieve parts from the stored part information depending on retrieval conditions. The part database 1 has information on parts accumulated therein, the parts constituting each production machine, so that even for production machines having their specification frequently changed, the terminal 4 can easily and promptly identify their parts including portions of the specification which are unique to the individual production machines.

According to the present invention, the part information requesting means 13 may transmit information including identification information on the individual production machines. In this case, the database 1 may extract, in response to the transmission request, information on parts concerning a production machine specified by the identification information and may transmit the information as machine-specific part information 6 comprising a group of pieces of part information on a specific production machine.

When the part information is transmitted to the terminal 4 as the machine-specific part information 6 comprising a group of pieces of part information on a specific production machine, the user at the terminal 4 can retrieve parts from a minimum required amount of information, and the necessary time for retrieving parts can be shortened. Also, the receiving time of the data is shortened.

According to the present invention, the transmission requesting means 13 of the terminal 4 causes display means 18 provided in the terminal 4 to display a plurality of pieces of identification information on the production machines as a machine selection menu so that a production machine can be selected from the displayed selection menu.

In this case, since information on a production machine can be selected from the machine selection menu displayed on the display means 18, the production machines can be individually identified even if identification information thereon is not reliable or if the user does not know about the production machines.

### Brief Description of the Drawings

Figure 1 is a block diagram showing a conceptual configuration of a part retrieving system for production machines according to one embodiment of the present invention.
Figure 2 is an explanatory representation of machine part information for the part retrieving system.
Figure 3 is an explanatory representation of a part table contained in the machine part information.
Figure 4 is an explanatory representation of a condition input window in a retrieval screen.
Figure 5 is an explanatory representation of an assembly drawing contained in the machine part information.
Figure 6 is an explanatory representation of an electric-circuit diagram contained in the machine part information.
Figure 7 is an explanatory representation of a part information request input screen.
Figure 8 is an explanatory representation of part information send request information.
Figure 9 is an explanatory representation of part order information.
Figure 10 is an explanatory representation of an example of an environment to which this part retrieving method is applied.
Figure 11 is a block diagram of a conceptual configuration of a numerical controller for the part retrieving method.
Figure 12 is a flow chart of a process of creating machine part information.
Figure 13 is a conceptual drawing of a part supplying service including this part retrieving method.
Figure 14 is a detailed conceptual drawing of the part supplying service including this part retrieving method.
Figure 15 is an explanatory representation of an example of a production machine.
Figure 16 is an explanatory representation of parts constituting the production machine.

### Detailed Description of the Preferred Embodiments

One embodiment of the present invention will be described with reference to the drawings. This part retrieving system for production machines creates machine part information 6 for each production machine, and passes the machine part information 6 to a terminal 4 via a path running from a database 1 through a communication network 3 and a path running through a portable storage medium 5 to make it possible to retrieve parts. The communication network 3 is, for example, a WWW (World Wide Web) such as the Internet. The portable storage medium 5 may be a compact disk (CD-ROM) or rewritable compact disk, a memory chip, or the like. The storage medium 5 may not only be rewritable as mentioned above but also be overwritable. The machine part information comprises part tables, assembly drawings, electric-circuit diagrams, and the like.

The part database 1 is composed of a database main body 21 containing a collection of information having a fixed data structure and a database managing system 22 for managing the database main body 21. The database 1 may be physically simple or may be distributed. A server machine 2 having the database 1 is provided in an office 25 of a company manufacturing the production machine and is composed of data processing equipment such as a general-purpose computer constituting a local area network (not shown in the drawings) of the office 25.

The server machine 2 is connected to the communication network 3 via communication means 24 such as a terminal adapter.

The part database 1 is composed of a relational database using, for example, the SQL language. Information may be registered in the part database 1 in an arbitrary form, and the database managing system 22 comprises extraction means 26 for extracting the machine part information 6 on an arbitrary production machine from the information on the parts of all the registered production machines.

Storage medium creating means 27 records the machine part information 6 on the portable storage medium 5. The storage medium creating means 27 is composed of, for example, a personal computer comprising a drive that can execute writes to the storage medium 5 such as a rewritable compact disk. The machine part information 6 may be created by the storage medium creating means 27 and then transferred to the part database 1 for registration, or may be registered in the part database 1, subsequently extracted by the extraction means 26, and then transferred to the storage medium creating means 27.

The terminal 4 has only to be data processing equipment, and it may be a portable personal computer such as what is called a notebook personal computer, or a computerized controller for controlling the production machine. The hardware configuration of the terminal 4 includes operation chips and memories as well as a medium readout means 11 for reading out information from the portable storage medium 5, communication means 12 such as a modem or a terminal adapter which communicates with the communication network 3, display means 17 such as a liquid crystal display or a CRT, and input means 18 such as a mouse and a keyboard.

The terminal 4 comprises part information requesting means 13 for requesting the part database 1 to send information on parts, storage means 14 for storing part information sent in response to the send request, retrieval means 15 that can retrieve parts from the stored part information depending on retrieval conditions, and part ordering means 16. The storage means 14 is a predetermined storage area provided in a magnetic disk or the like. The retrieval means 15 can not only execute retrievals from the stored contents of the storage means 14 but also retrieve parts while causing the medium readout means 11 to read out information from the portable storage medium 5. The part ordering means 16 creates order information depending on the result of the retrieval by the retrieval means 15 and sends it to the communication network 3.

The order information may be in the form of electronic mails or fax. The retrieval means 15, the part ordering means 16 and the part information requesting means 13 are configured by installing them in the terminal 4 composed of general data processing equipment. The functions of the means 13 to 16 constituting the terminal 4 will be described later in conjunction with a retrieval method.

The order information created by the part ordering means 16 is sent to order processing means 19 connected to the communication network 3. The order processing means 19 executes an order process by, for example, sending part request information to a part manufacturer or a part storage site in accordance with the order information. The order processing means 19 is provided in data processing equipment 20 such as a computer which has communication means 20a. The data processing equipment 20 having the order processing means 19 may be provided in an office of a maintenance service department of a machine producing company or may be a portable personal computer.

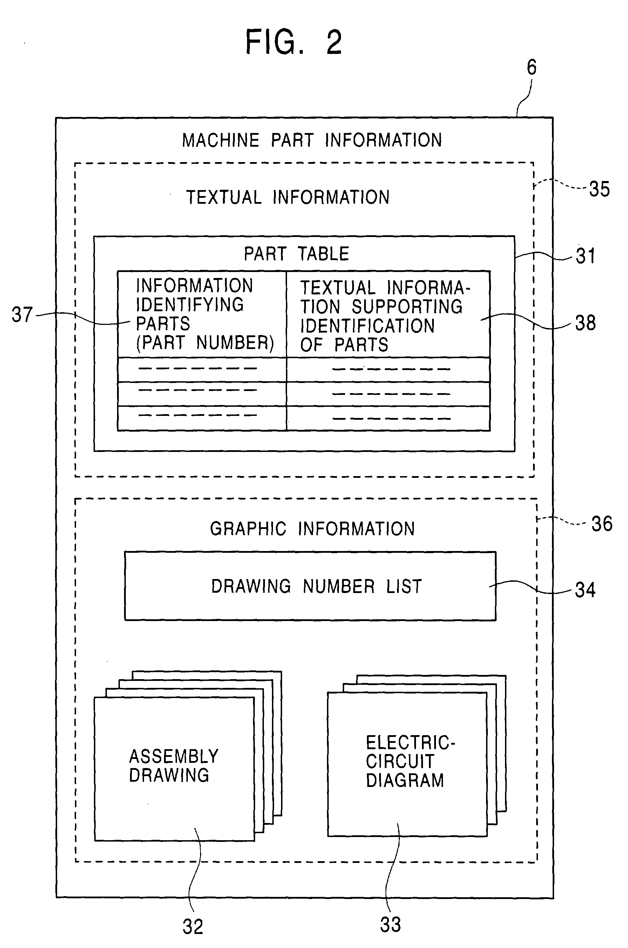

Figure 2 shows a conceptual organization of the machine part information 6. The machine part information 6 is a collection of information on the parts constituting one production machine, including portions of its specification which differ from those of the other production machines. The machine part information 6 may be a collection of plural files or may constitute a data portion of a database.

The machine part information 6 is essentially composed of a part table 31, an assembly drawing 32 and an electric-circuit diagram 33. That is, the machine part information 6 includes textual information 35 comprising the part table 31, and graphic information 36 comprising the assembly drawing 32 and the electric-circuit diagram 33. The assembly drawing 32 and the electric-circuit diagram 33 are provided with a drawing number table 34. The textual information 35 is recorded as text codes or the like, and the graphic information is recorded as CAD data in the form of vector data.

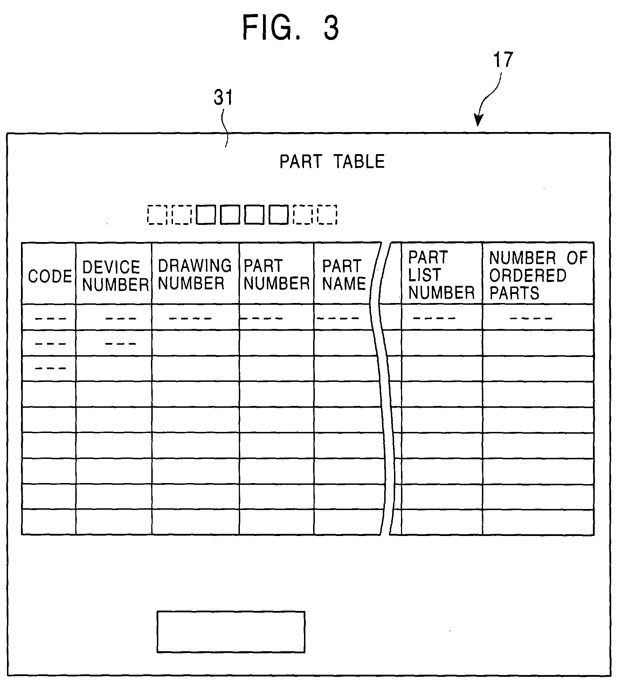

The part table 31 lists information 37 such as part numbers which allows parts to be identified and textual information 38 such as part names and the numbers of drawings containing the parts which information supports the identification of the parts. Figure 3 is a simplified diagram of an example in which the part table is displayed on a screen of the display means 17. The part table 31 is not limited to an actual table but may be any data that can be displayed as a table.

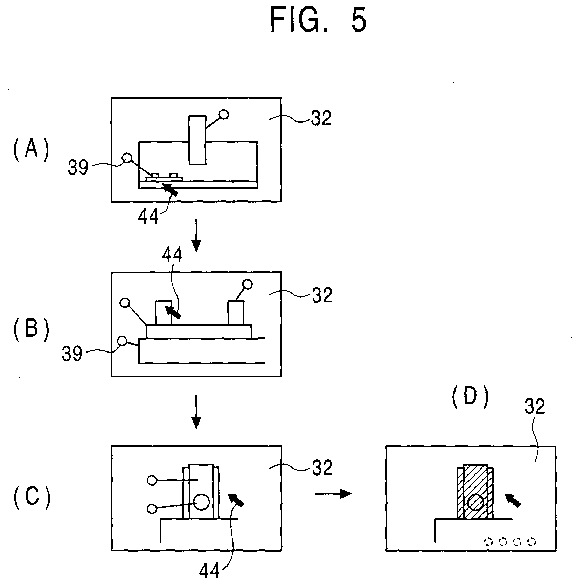

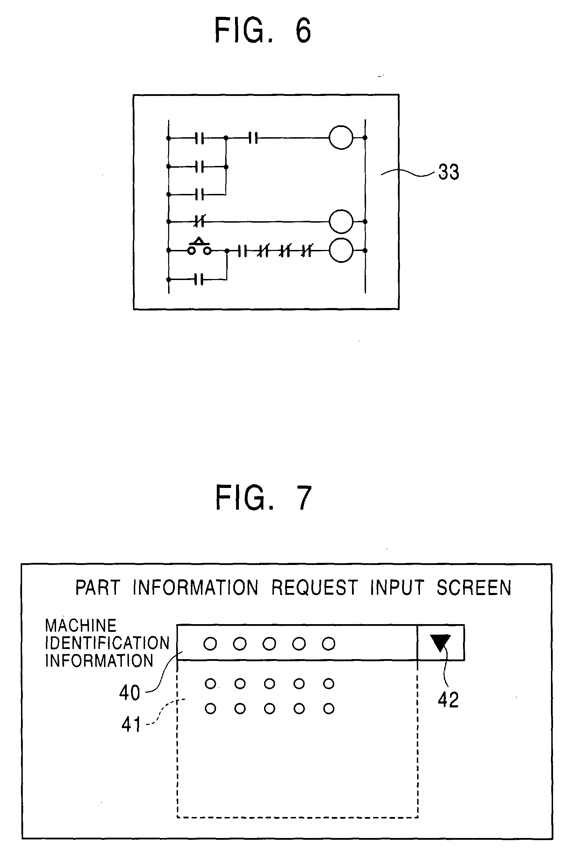

As shown in Figure 5 by way of example, the assembly drawing 32 is for the parts constituting the production machine and is comprised of a plurality of hierarchically arranged drawings. As shown in this figure, the assembly drawing 32 contains leader marks 39 showing particular portions of the drawing, and part numbers or the like are displayed next to the leader marks 39 or in display sections that are different from those of the leader marks 39. As shown in Figure 6 by way of example, the electric-circuit diagram shows 33 an electric circuit constituting the production machine.

The assembly drawing 32 and the electric-circuit diagram 33 are linked together by means of link information so that when a predetermined portion of the assembly drawing 32 or the electric-circuit diagram 33 is specified, another diagram 33 or the drawing 32 is displayed on the screen. The part table 31 and both the assembly drawing 32 and the electric-circuit diagram 33 are also linked together by means of link information so that when a predetermined portion of the part table 31 is specified, the corresponding drawing 32 and diagram 33 are displayed on the screen and so that when a predetermined portion of the drawing 32 or the diagram 33 is specified, the corresponding portion of the part table 31 is displayed on the screen.

The retrieval means 15 of the terminal 4 in Figure 1 has a function as a browser to display text codes containing the link information for the machine part information 6 as well as CAD drawing data on the screen of the display means 17 and change the displayed portion in response to the input of the specification of the link information, and a function as CAD drawing displaying means. Further, the retrieval means 15 has the retrieval function of allowing a user to input and specify parts in the part table 31, drawing 32 or diagram 33 displayed on the screen, and the retrieval function of allowing the user to input retrieval conditions and retrieving information depending on the retrieval conditions, as well as the selection function of allowing the user to select a desired one of the retrieved parts. A retrieval section 15a of the retrieval means 15 in Figure 1 executes the above two retrieval functions, and a selection section 15b executes the above selection function.

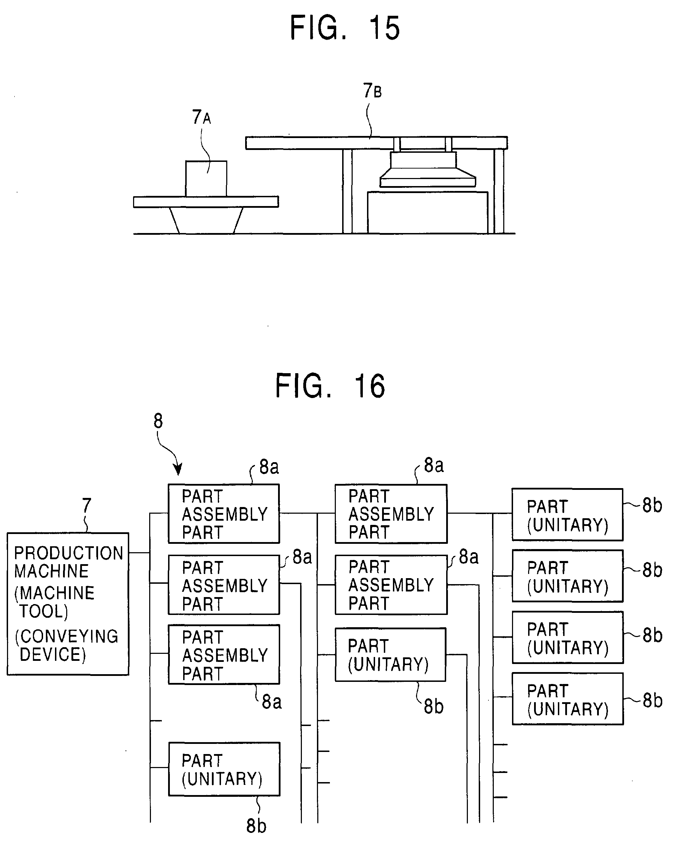

The relationship between the machine part information 6 in Figure 2 and the production machine will be described. First, the production machine will be described. Figure 15 shows an example of the production machine in which two production machines 7 (7A, 7B) are provided as one production facility. The term "production machine" as used herein includes machines such as machine tools which produce articles and machines such as conveying devices which are used in connection with the machines for producing articles. The machine tools are not limited to those in a narrow sense such as lathes and machining centers but are those in a broad sense including punch presses and other plate processing machines. In the example in Figure 15, the production machine 7A produces articles and is, for example, a plate processing machine such as a punch press, for example, and the next production machine 7B is a conveying device for loading and unloading works in and from the production machine 7A.

As shown in Figure 16, parts 8 constituting the production machine 7 include a part assembly part 8a and a unitary part 8b. The part assembly part 8a is composed of a lower part assembly part 8a and unitary part 8b. For example, in a punch press, the part assembly part 8a is a punch driving device or a table device, or a clamp mechanism, a table feeding device, or the like constituting these devices. Parts constituting the part assembly part 8a are a feed screw mechanism, a work holder, and the like. Electric equipment such as a sensor is also among the parts 8.

The machine part information 6 in Figure 2 is a collection of information on the parts 8 such as the part assembly parts 8a and the unitary parts 8b of each production machine 7, and contains part identification information on all the parts 8 that can be replaced with new ones.

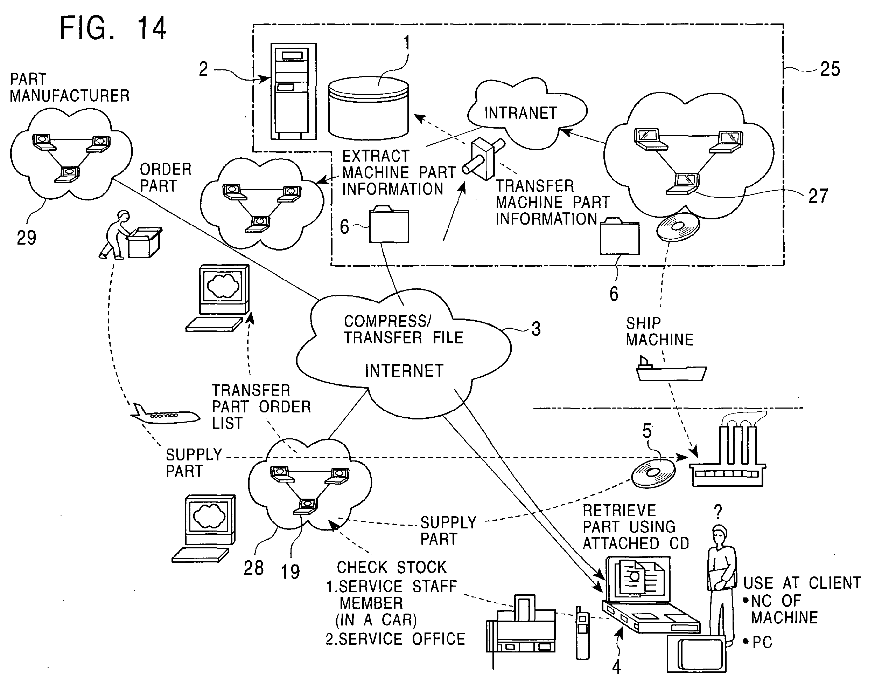

A retrieval method executed by the part retrieving system configured as described above will be described. Figure 14 is an explanatory representation showing how to use the retrieval system shown in Figure 1. When a new production machine is to be manufactured, information on the parts constituting that production machine is created as the machine part information 6 together with identification information (serial numbers or the like) on the production machine. For example, the machine part information 6 is created by the storage medium creating means 27, recorded on the portable storage medium 5, and then transferred to the part database 1 for registration. Alternatively, the machine part information 6 created by appropriate means may be registered in the part database 1, and a portion of the machine part information 6 which corresponds to the production machine may be extracted by the extraction means 26 and then transferred to the storage medium creating means 27, which may then record the information on the storage medium 5. In this manner, the portable storage medium 5 with the machine part information 6 recorded thereon is created. This storage medium 5 is attached to the production machine before shipment. A nameplate showing identification information (serial number or the like) is also stuck to the production machine. This machine identification information is also displayed on a case of the storage medium 5 or the like.

When a part is to be retrieved for the maintenance of the production machine, the portable storage medium 5 is installed in the medium readout means 11 of the terminal 4, and that part is retrieved from the machine part information 6 recorded on the storage medium 5 using the retrieval means 15. The retrieval may be executed by using the medium readout means 11 for readouts, or the recorded contents read out by the medium readout means 11 may be copied to the storage means 14 so that the part can be retrieved from the storage means 14.

Without any portable storage medium 5 or if the production machine is outdated and currently available parts are thus expected to be different from the contents of the machine part information 6 stored in the original storage medium 5, the terminal 4 is used to obtain the machine part information 6 from the part database 1 via the communication network 3. The information in the part database 1 is constantly updated or provided with additional information when the manufacture of a certain part is suspended or when a new compatible part has been developed.

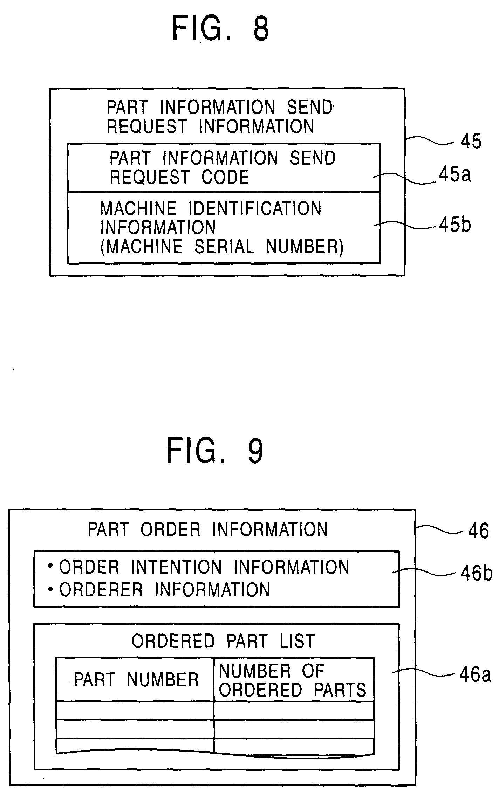

To obtain the machine part information 6 via communication, the part information requesting means 13 of the terminal 1 sends the part database 1 information containing a request for transmission of part information. As conceptually shown in Figure 8, this send request information 45 contains a send request code 45a and identification information 45b for each production machine.

Specifically, the part information requesting means 13 of the terminal 4 executes a predetermined input to cause a part information request input screen to be displayed as shown in Figure 7. This input screen displays a machine identification information input box 40. When production machine identification information (serial number or the like) is input to this input box 40, the part information requesting means 13 sends send request information to the part database 1 when a send command is input.

The production machine identification information is described on the nameplate stuck to the machine or on the case of the storage medium 5. If this information is unavailable, the user displays a machine selection menu 41 on the input screen, and selects identification information from the displayed machine election menu. The part information requesting means 13 in Figure 1 displays the machine selection menu 4 when a predetermined mark 42 displayed in the input screen is selected. The machine selection means 41 is displayed, for example, as a pull-down menu. Thus, an unknown machine identification number can be identified. The machine selection menu 41 is created, for example, by a user of the terminal 4 by registering a plurality of available machine identification numbers at an appropriate time before the retrieval.

Upon receiving the send request information, the part database 1 causes the extraction means 26 to extract information on the parts concerning the production machine identified by the identification information and sends the terminal 4 the machine part information 6, a group of pieces of information on the parts of that production machine. The machine part information 6 is sent after compression of the data. The terminal 4 stores the received machine part information 6 in the storage means 14 and executes retrievals from the machine part information 6 stored in the storage means 14. If the received machine part information 6 has been compressed, the terminal 4 decompresses and stores it in the storage means 14.

At the terminal 4, the user may execute retrieval using either the part table 31 or the assembly drawing 32 or the electric-circuit diagram 33, which are all shown in Figure 2, or may combine these retrieval methods together. The retrieval means 15 in Figure 1 enables various retrievals as described below.

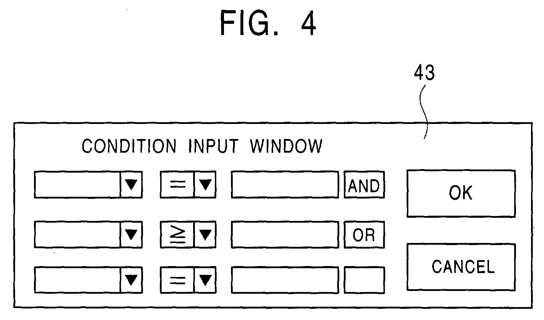

If the part table 31 is used for retrieval, the user displays the part table 31 on the screen as shown in Figure 3, and views the contents of the display to select part identification information such as a part number. The part table 31 can be entirely displayed by scrolling the screen or advancing pages of the screen. By selecting an arbitrary one of the items in the heading section of the part table 31, the displayed contents of the part table 31 can be rearranged in the ascending or descending order of the selected item. Further, as shown in Figure 4, when the user displays a condition input window 43 on the screen, inputs a plurality of retrieval conditions thereto, and issues a retrieval command, the portion of the part table 31 in which the part meeting the retrieval conditions is displayed appears in an outstanding site of the table such as its top row. When a drawing number in the part table 31 is displayed, the drawing corresponding to that drawing number is displayed on the screen of the display means 17.

As shown in Figure 5, if the assembly drawing 32 is used for retrieval, the user displays the assembly drawing 32 on the screen and views the display in the screen. Further, by selecting a predetermined portion of the displayed assembly drawing 32, another assembly drawing 32 can be displayed. When the leader mark 39 or the like in the assembly drawing 32 is specified, the part number or the like of the corresponding part is shown in the screen. Any item in the assembly drawing 32 can be selected by placing a cursor 44 displayed in the screen on the selected site and inputting a click or the like.

If the electric-circuit diagram 33 in Figure 6 is used, the retrieval can be executed similarly to the retrieval with the assembly drawing 32.

In this manner, parts can be retrieved efficiently. If the retrieved part is to be ordered, the following process is executed.

First, the number of ordered parts is filled in the section "number of ordered parts" of a row of the part table 31 (Figure 3) which contains a desired part.

Under these conditions, order information creation command is input to the terminal 4 by selecting the corresponding icon or the like. The part ordering means 16 in Figure 1 creates part order information 46 containing an ordered part list 46a and order intention and orderer information 46b, as shown in Figure 9. The ordered part list 46a is obtained by extracting information required for the order, from the part table 31 in Figure 3. The part order information 46 is composed of text information or the like and is in an information form that can be sent, for example, by electronic mail or fax. Once the part order information 46 has been created and when a predetermined order command is input, the part ordering means 16 sends the part order information 46 to a predetermined manufacturer or a manufacturer specified when the order information was created.

The retrieval means 15 can display the numbers of previously ordered parts in the display section of the number of ordered parts displayed in the part table 31 in the machine part information 6, in response to a predetermined command. The numbers of previously ordered parts may be stored in an appropriate storage section of the retrieval means 15 or as data for the machine part information 6 for the part database 1.

In this manner, the part to be replaced can be promptly identified on the basis of the machine part information 6 created for each production machine, thus making it possible to easily execute a process required to complete an order.

Upon receiving the part order information 46, the order processing means 19, for example, transfers the part list to a part manufacturer 29, which then supplies the corresponding part to the client of the production machine, as shown in Figure 14.

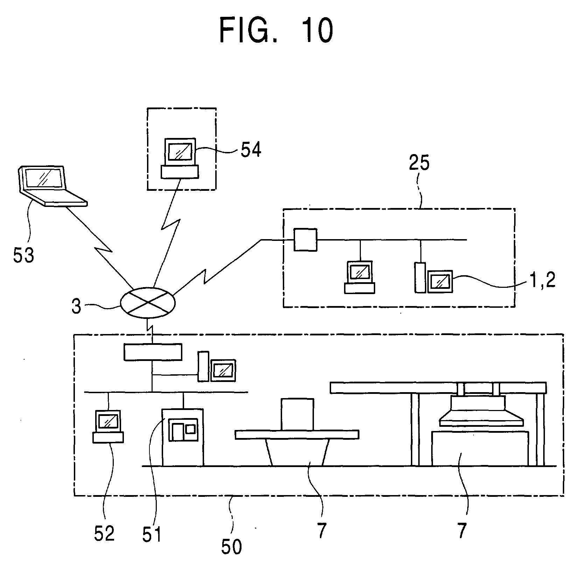

Figure 10 is an explanatory representation of an example of an environment to which this part retrieving system or method is applied. The server machine 2 comprising the part database 1 constitutes a local area network in the office of the company manufacturing the production machine. A local area network including a numerical controller 51 or a computer 52 for the production machine 7 is constructed in a factory 50 of the client in which the production machine 7 is installed. These local area networks are connected together vial the communication network 3 such as the Internet. The communication network 3 is connected to a portable personal computer 53 of a service staff member from the company manufacturing the production machine and to a computer 54 in the service office.

The numerical controller 51, the computer 52, the service staff member's personal computer 53 and the computer 54 in the service office have the functions of the terminal 4 in Figure 4 and can retrieve parts.

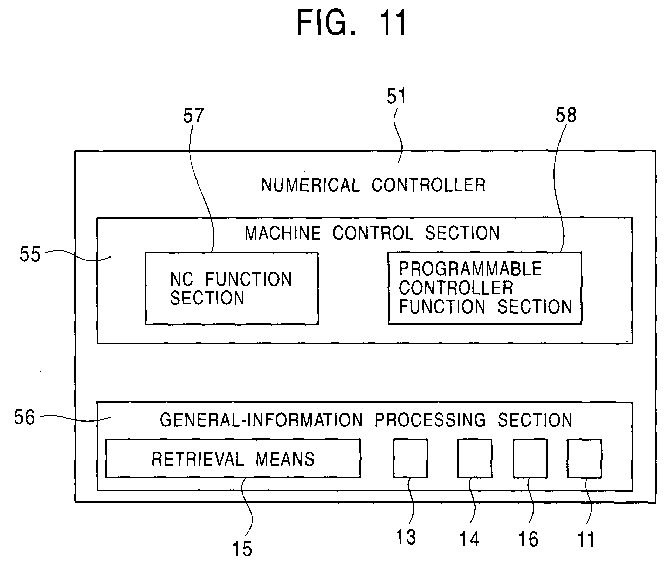

As shown in Figure 11 by way of example, the numerical controller 51 comprises a machine control section 55 having an NC function section 57 and a programmable controller function section 58, and a general-information processing section 56 having the retrieval means 15, the part information requesting means 13, the storage means 14, the part ordering means 16, and the medium read-out means 11, which are all shown in Figure 1.

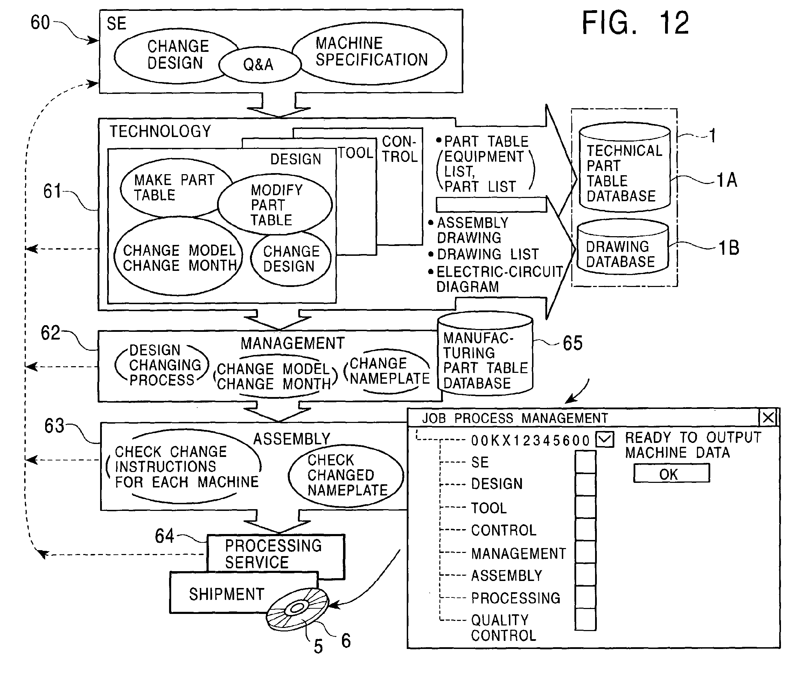

Figure 12 is a conceptual process drawing showing a process of creating the machine part information 6. In this method, changes in design which are made by a plurality of processing departments 61 to 64 for the design, assembly, and management of the production machine are reflected in the machine part information 6. First, once a system engineering department 60 has formulated a specification for the production machine, a design section, a tool section, and a control section of a technology department 61 make a part table. An equipment list and a part list (PL) for the part table are also made, and an assembly drawing, an electric-circuit diagram, a drawing list, and the like are drawn or made. Information on the part table is registered in a technical part table database 1A. The assembly drawing, the electric-circuit diagram, the drawing list, and the like are registered in a drawing database 1B. The technical part table database 1A and the drawing database 1B may store temporarily specified machine part information 6 or information that has not been completed or may constitute part of the part database 1. For the parts in the design specification, a management department 62 checks the contents registered in a manufacturing part table database 65 for stocked or available parts, prices thereof, and the like, and the design is changed, for example, any of the parts in the specification are changed to compatible ones, if required. Subsequently, an assembly department 63 assembles the production machine, and a processing service 64 department 64 ships it. At this time, a portable storage medium 5 with the machine part information 6 recorded thereon is created from the technical part table database 1A and the drawing database 1B and is then attached to the production machine to be shipped.

If any of the technology, management, assembly, and processing services 61 to 64 desires to change the design, the system engineering department 60 is notified of that change in specification and instructs the technology, management, assembly, and processing services 61 to 64 to execute a design changing process associated with the change in specification. The technology department then modifies the part table 31 in the part database 1 and the like.

A database management system for the part database 1 manages the progress of jobs executed by the departments and writes the machine part information 6 to the portable storage medium 5 when all the departments are determined to have completed their jobs.

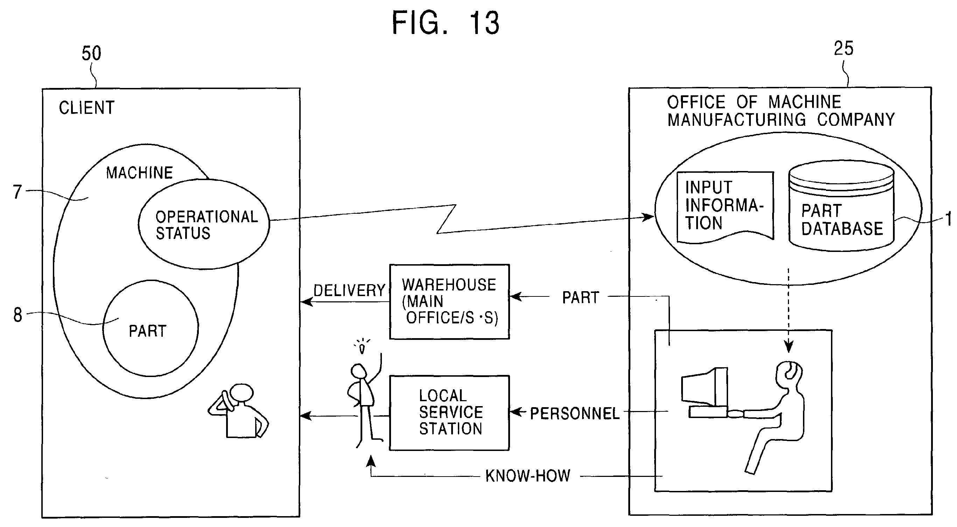

Figure 13 shows the concept of a part replacing service operation including this part retrieving system or method. The operational status of the client's production machine 7 is sent via the communication network to the office 25 of the machine manufacturing company having the part database 1. This input information is registered in the part database 1 or another database.

When talking with the client about a part replacement over the telephone or using another communication means, a staff member of the service department displays the part table or the like on the screen of the terminal 4 (Figure 1) to identify the part to be replaced.

The part retrieving system for production machines utilizing a network according to the preset invention comprises the part database and the terminal connected to the part database via the communication network for bidirectional communications with the part database. The part database has information on parts accumulated therein, the parts constituting each of production machines having different specifications. The terminal comprises the part information requesting means for requesting the part database to transmit the part information, the storage means for storing the part information transmitted in response to the transmission request, and the retrieval means for retrieving parts from the stored part information depending on retrieval conditions. Therefore, even for production machines having their specification frequently changed, the user can easily and promptly identify their parts including portions of the specification which are unique to the individual production machines, and the user can execute retrievals from anywhere as long as his or her terminal is connected to the network.

If the part information requesting means transmits information including identification information on the individual production machines, and the database extracts, in response to the transmission request, information on parts concerning a production machine specified by the identification information and transmits the information as machine-specific part information comprising a group of pieces of part information on a specific production machine, then only a minimum required amount of data is required to be transmitted, thus reducing the amount of time required to retrieve parts.

If the transmission requesting means of the terminal causes the display means provided in the terminal to display a plurality of pieces of identification information on the production machines as a machine selection menu so that a production machine can be selected from the displayed selection menu, then the user can specify individual production machines even if identification information on these production machines is not available.

## Claims

1. A part retrieving system for production machines utilizing a network, the system being **characterized in that** the system comprises a part database and a terminal connected to the part database via a communication network for bidirectional communications with the part database, said part database has information on parts accumulated therein, the parts constituting each of production machines having different specifications, and said terminal comprises part information requesting means for requesting said part database to transmit the part information, storage means for storing the part information transmitted in response to said transmission request, and retrieval means for retrieving parts from the stored part information depending on retrieval conditions.

2. A part retrieving system for production machines utilizing a network according to Claim 1, the system being **characterized in that** said part information requesting means transmits information including identification information on the individual production machines, said database extracts, in response to said transmission request, information on parts concerning a production machine specified by said identification information and transmits the information as machine-specific part information comprising a group of pieces of part information on a specific production machine.

3. A part retrieving system for production machines utilizing a network according to Claim 2, the system being **characterized in that** said transmission requesting means of said terminal causes display means provided in said terminal to display a plurality of pieces of identification information on said production machines as a machine selection menu so that a production machine can be selected from the displayed selection menu.
